# DEMANDE DE BREVET EUROPEEN

(11) **EP 2 105 366 A2**
(43) Date de publication de la demande: **30.09.2009**
(21) Numéro de dépôt: 09155954.2
(22) Date de dépôt: 24.03.2009
(51) Int. Cl.: B60W 20/00, H02J 7/14, B60W 10/08, B60W 10/26

(54) **Procédé et dispositif de contrôle d'une charge électrique**

(30) Priorité: 28.03.2008 FR 0852057
(71) Demandeur: PEUGEOT CITROËN AUTOMOBILES S.A., 78140 Vélizy Villacoublay (FR)
(72) Inventeur: Dollinger, Nicolas, 78500 Sartrouville (FR); Migaud, Melaine, 75012 Paris (FR); Robart, Nicolas, 92130 Issy Les Moulineaux (FR); Mercier Calvairac, Fabien, 75010 Paris (FR)

(57) **Abrégé**

Dans un système de véhicule hybride qui comporte un stockeur électrique (11) et une machine électrique (53), le procédé de contrôle d'une charge électrique comprend
une première étape pour déterminer une charge maximale admissible dans le stockeur électrique (11) pour permettre au stockeur électrique (11) d'absorber une charge supplémentaire liée à un état courant de fonctionnement du véhicule ;
une deuxième étape pour déterminer une consigne de couple à appliquer à la machine électrique (53) de façon à atteindre ladite charge maximale admissible ;
une troisième étape pour appliquer ladite consigne de couple à la machine électrique (53).

## Description

L'invention concerne un procédé et un dispositif de contrôle d'une charge électrique dans un système de véhicule hybride qui comporte un stockeur électrique et une machine électrique.

Dans un véhicule hybride, la charge d'un stockeur électrique est utile pour faire participer une machine électrique à la propulsion du véhicule. Pour être utilisable sans risque de détérioration du stockeur, la charge doit être dans une plage de valeurs, dite utile. Une valeur basse de la plage correspond généralement à la charge minimale à assurer pour alimenter des accessoires sans vider totalement le stockeur qui aurait pour effet de le mettre hors service. Une valeur haute de la plage correspond généralement à une sécurité contre les risques de surcharge du stockeur qui aurait pour effet un vieillissement prématuré, voire une destruction du stockeur.

Tant que le véhicule est en état de marche, on contrôle généralement la charge de façon à ne pas descendre en dessous de la valeur basse et à ne pas monter au dessus de la valeur haute de la plage. La charge évolue entre la valeur basse et la valeur haute en fonction du mouvement du véhicule. Il est en particulier possible de recharger le stockeur lorsque la charge baisse en mettant à contribution un moteur thermique ou une énergie cinétique du véhicule.

Lorsque le véhicule est à l'arrêt, la charge du stockeur diminue en fonction de la consommation d'accessoires.

Dans le domaine technique du contrôle de charge, le document WO2006/018695, divulgue un système pour se prémunir contre une baisse de charge excessive, induite par une consommation d'accessoires, lorsque le véhicule est à l'arrêt. Le système divulgué détermine une seconde valeur basse à ne pas franchir lorsque le véhicule est à l'arrêt et une première valeur basse à ne pas franchir lorsque le véhicule est en état de marche avant de passer à l'arrêt de façon à garder une réserve pour les accessoires.

L'état antérieur de la technique s'intéresse à la capacité de restitution d'énergie par le stockeur mais peu ou pas à la capacité d'absorption d'énergie. Les problèmes de capacité d'absorption d'énergie par le stockeur sont disjoints, voir en contradiction avec les problèmes de capacité de restitution d'énergie. La connaissance de moyens de dissipation d'énergie classique, privilégie une optimisation de la capacité de restitution au détriment, si besoin est, de l'optimisation de la capacité d'absorption. L'inconvénient est qu'une dissipation d'énergie en pure perte, est contraire aux besoins en économies d'énergie. Des difficultés existent pour concilier capacités de restitution et capacité restitution.

Pour remédier aux problèmes de l'état antérieur de la technique, un objet de l'invention est un procédé de contrôle d'une charge électrique dans un système de véhicule hybride qui comporte un stockeur électrique et une machine électrique. De façon remarquable, le procédé comprend :
- une première étape pour déterminer une charge maximale admissible dans le stockeur électrique pour permettre au stockeur électrique d'absorber une charge supplémentaire liée à un état courant de fonctionnement du véhicule ;
- une deuxième étape pour déterminer une consigne de couple à appliquer à la machine électrique de façon à atteindre ladite charge maximale admissible ;
- une troisième étape pour appliquer ladite consigne de couple à la machine électrique.

Particulièrement, dans la première étape, ledit état courant correspond à une vitesse du véhicule.

Plus particulièrement dans la deuxième étape, la consigne de couple est :
- déterminée à une valeur négative extrême basse de façon à recharger fortement le stockeur électrique tant que la charge électrique dans le stockeur électrique est inférieure à une charge minimale, et
- déterminée à une valeur négative proportionnelle à un écart entre la charge électrique dans le stockeur électrique et la charge maximale admissible tant que la charge électrique dans le stockeur électrique est inférieure à ladite charge maximale admissible de façon à recharger progressivement le stockeur électrique.

Avantageusement, dans la deuxième étape, la consigne de couple est :
- déterminée à une valeur positive proportionnelle à un écart entre la charge électrique dans le stockeur électrique et la charge maximale admissible tant que la charge électrique dans le stockeur électrique est supérieure à ladite charge maximale admissible de façon à délester progressivement le stockeur électrique.

Avantageusement aussi, ladite charge maximale admissible est égale à une valeur minimale qui permet au stockeur électrique d'absorber la charge supplémentaire quand l'état courant de fonctionnement du véhicule est le plus contraignant.

Un autre objet de l'invention est un dispositif de contrôle d'une charge électrique dans un système de véhicule hybride qui comporte un stockeur électrique et une machine électrique. De façon remarquable, le dispositif comprend :
- un premier module agencé pour déterminer une charge maximale admissible dans le stockeur électrique pour permettre au stockeur électrique d'absorber une charge supplémentaire liée à un état courant de fonctionnement du véhicule, et agencé pour déterminer une consigne de couple à appliquer à la machine électrique de façon à atteindre ladite charge maximale admissible ;
- un deuxième module agencé pour appliquer ladite consigne de couple à la machine électrique.

Particulièrement, le premier module est agencé pour faire correspondre ledit état courant à une vitesse du véhicule.

Plus particulièrement, le premier module comprend des valeurs mémorisées pour déterminer la consigne de couple :
- à une valeur négative extrême basse de façon à recharger fortement le stockeur électrique tant que la charge électrique dans le stockeur électrique est inférieure à une charge minimale, et
- à une valeur négative proportionnelle à un écart entre la charge électrique dans le stockeur électrique et la charge maximale admissible tant que la charge électrique dans le stockeur électrique est inférieure à ladite charge maximale admissible de façon à recharger progressivement le stockeur électrique.

Avantageusement, le premier module comprend des valeurs mémorisées pour déterminer la consigne de couple :
- à une valeur positive proportionnelle à un écart entre la charge électrique dans le stockeur électrique et la charge maximale admissible tant que la charge électrique dans le stockeur électrique est supérieure à ladite charge maximale admissible de façon à délester progressivement le stockeur électrique.

Avantageusement aussi, lesdites valeurs de charge maximale admissible sont minimales quand elles permettent au stockeur électrique d'absorber la charge supplémentaire liée à l'état courant de fonctionnement du véhicule le plus contraignant.

L'invention sera mieux comprise à la lecture de la description qui suit et à l'examen des figures qui l'accompagnent. Ces figures ne sont données qu'à titre illustratif et nullement limitatif de l'invention. Elles montrent :
- figure 1 : une représentation schématique des éléments essentiels d'un véhicule hybride pour mettre en oeuvre l'invention ;
- figure 2 : un diagramme montrant une première stratégie de recharge d'un stockeur électrique selon le niveau de charge ;
- figure 3 : un diagramme montrant une deuxième stratégie de recharge d'un stockeur électrique selon le niveau de charge ;
- figure 4 : une courbe d'évolution de l'énergie récupérable en fonction de la vitesse du véhicule ;
- figure 5 : une courbe montrant l'évolution de l'état de charge à ne pas dépasser en fonction de la vitesse du véhicule ;
- figure 6 : un diagramme montrant un décalage de courbe de recharge en fonction de la vitesse ;
- figure 7 et figure 8 : un logigramme montrant des étapes de procédé conformes à l'invention.

Les éléments identiques conservent la même référence d'une figure à l'autre.

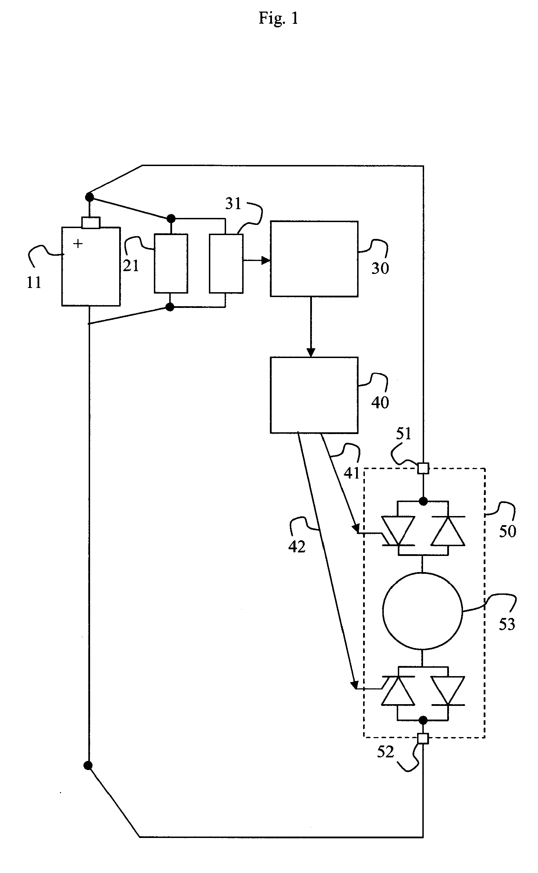

En référence à la figure 1, un véhicule hybride comprend un stockeur électrique 11 constitué d'une batterie, de super capacités ou de tout autre élément apte à stocker de façon réversible de l'énergie électrique. Divers consommateurs électriques 21 tels que les phares d'éclairage, les éléments de chauffage et de climatisation du véhicule, les organes de pilotage de la boîte de vitesses, sont branchés aux bornes du stockeur électrique 11 et consomment l'énergie électrique dont ils ont besoin au moment opportun. Un convertisseur 50 réversible d'énergie électrique en énergie mécanique consomme de l'énergie électrique fournie par le stockeur électrique dans différents cas de vie. Si le véhicule fonctionne sans moteur thermique (non représenté), c'est le stockeur électrique seul qui fournir l'énergie nécessaire à la traction. Lorsque le véhicule fonctionne avec le moteur thermique, le stockeur électrique apporte parfois un complément d'énergie pour améliorer les performances, par exemple. Le convertisseur réversible 50 fournit de l'énergie au stockeur électrique notamment lorsque le véhicule est en décélération ou en pente descendante, mais cela ne suffit pas nécessairement à assurer un bilan énergétique nul. Le convertisseur réversible 50 doit aussi fournir de l'énergie électrique pour recharger le stockeur électrique 11 à d'autres moments en mettant à contribution le moteur thermique.

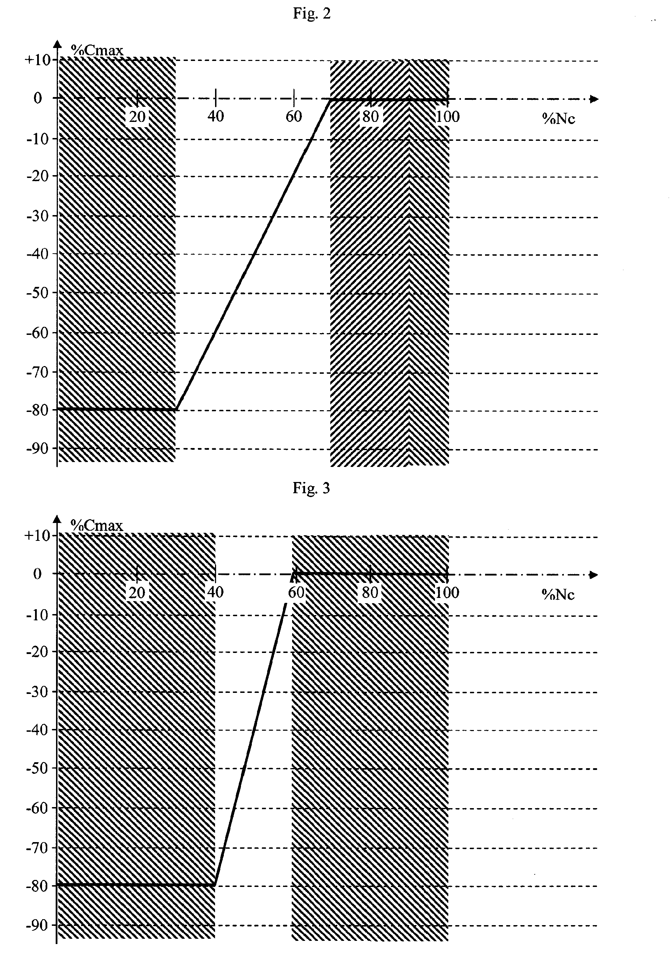

Le convertisseur réversible 50 comprend une borne 51 reliée au pôle positif du stockeur électrique 11 et une borne 52 reliée au pôle négatif du stockeur électrique 11. Entre les bornes 51 et 52, le convertisseur réversible 50 comprend par exemple une machine électrique 53 qui fournit de l'énergie mécanique en mode moteur lorsque le convertisseur réversible 50 est commandé par un élément de signal 41 et absorbe de l'énergie mécanique en mode génératrice pour charger le stockeur électrique 11 lorsque le convertisseur réversible 50 est commandé par un élément de signal 42. Les éléments de signaux 41 et 42 sont générés par un module généralement électronique 40. Le module 40 établit les valeurs des éléments de signaux 41 et 42 en fonction d'une consigne de couple à fournir ou à absorber par la machine électrique 53. Pour ce faire, le module 40 reçoit diverses commandes, par exemple des unités de freinage ou des unités d'accélération du véhicule. Le module 40 reçoit aussi une commande particulière d'un module généralement électronique 30. Le module 30 est agencé pour recevoir un niveau de charge du stockeur 11 depuis un capteur 31 qui, de façon connue, mesure la tension aux bornes du stockeur électrique 11 et estime son impédance à partir d'un courant électrique traversant le stockeur électrique 11. En fonction du niveau de charge du stockeur électrique 11, qui évolue de 0 à 100%, le module 30 envoie une consigne de couple au module 40 tel que représenté par exemple sur la figure 2.

En référence à la figure 2, l'axe des ordonnées représente la consigne de couple en pourcentage du couple maximal Cmax. Les pourcentages négatifs qui représentent un couple négatif, correspondent à un mode de fonctionnement en génératrice de la machine électrique 53. Plus généralement, le convertisseur réversible 50 fournit alors de l'énergie électrique pour recharger le stockeur électrique 11. Les pourcentages positifs sur l'axe des ordonnées, correspondent à un fonctionnement en mode moteur de la machine électrique 53. En d'autres termes, le convertisseur réversible 50 absorbe alors de l'énergie électrique du stockeur électrique 11 pour la convertir en énergie mécanique de façon à faire baisser le niveau de charge dans le stockeur électrique 11. Le module 30 ayant principalement pour fonction de contrôler le niveau de charge du stockeur électrique 11, appelé SOC (acronyme de State of Charge en langue étrangère), on ne représente pas ici les pourcentages de couple allant au-delà de 10%.

Dans cet exemple, le stockeur électrique peut être utilisé entre 30 et 90% de SOC. Lorsque le stockeur est peu chargé, la recharge de la machine électrique se fait à fort couple. Lorsque le stockeur est bien chargé, la recharge est réalisée avec des couples de plus en plus faibles. Lorsque l'énergie utile du stockeur est importante, seule la récupération en décélération ou en pente, est utilisée pour recharger le stockeur afin de ne pas le saturer. La zone à gauche qui va de 0 à 30% du niveau de charge Nc ou SOC, avec des hachures descendantes, indique une zone dans laquelle le stockeur d'énergie est inutilisable pour d'autres applications telles que la traction électrique ou la climatisation, voire l'éclairage à très faible valeur. Il convient alors de recharger coûte que coûte le stockeur électrique et le module 30 renvoie une consigne de -80% au module 40. A partir de 30% de niveau de charge, la consigne de couple passe progressivement de -80% à 0% lorsque le niveau de charge a atteint 70%. La zone de niveau de charge allant de 70% à 90%, sur laquelle on note des hachures montantes, est strictement réservée à la récupération en décélération. Cette zone est suffisamment vaste pour qu'aucune énergie de décélération ne soit perdue, sauf en pente très longue. Enfin, la zone allant de 90% à 100% à nouveau avec des hachures descendantes est prohibée pour garder une marge de sécurité de façon à ne pas saturer le stockeur électrique.

En référence à la figure 3, reprenant les mêmes conventions qu'à la figure 2, on a représenté le cas d'un stockeur à moindre niveau d'énergie utile. L'application de ce type de stratégie à un stockeur ayant une plage d'énergie utile plus faible, ne permet plus de dédier une zone suffisante à la récupération car celle-ci représenterait toute la plage d'énergie disponible dans le stockeur. Seule la recharge progressive peut être conservée afin de couvrir à la fois les cas demandant de fortes recharges et ceux n'en nécessitant pas. La zone de recharge progressive va ici de 40% à 60% de Nc, synonyme de SOC.

Lorsque le stockeur est plein, l'énergie de décélération ne peut plus être récupérée. Ceci réduit de façon importante le gain de consommation dû à l'hybridation et fait disparaître le freinage électrique du véhicule. C'est ici qu'intervient l'invention pour assurer que l'énergie cinétique du véhicule pourra toujours être stockée dans la batterie ou dans les super capacités du stockeur électrique 11, durant la décélération en permettant le maintien de la prestation de freinage électrique.

A une vitesse donnée du véhicule, l'énergie qui peut être encore récupérée dans le stockeur doit être au moins égale à l'énergie récupérée lors d'une décélération jusqu'à l'arrêt du véhicule.

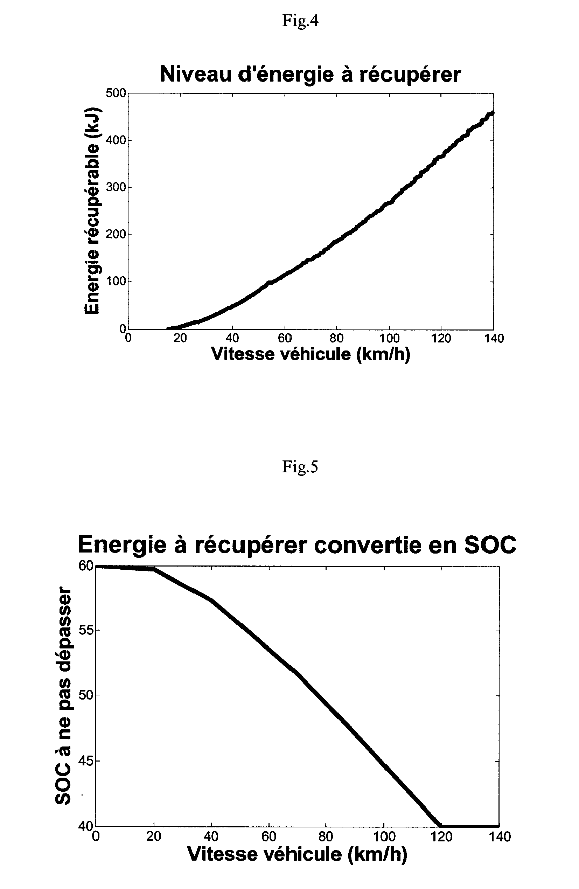

En référence à la figure 4, on a représenté le niveau d'énergie à récupérer en fonction d'une vitesse de véhicule allant de 0 à 140 km/h. La vitesse est représentée en abscisses. En ordonnées, on a représenté l'énergie récupérable en kilojoules qui, compte tenu du poids et du chargement d'un véhicule pris en exemple, évolue de 0 à 500 kilojoules. Après avoir évalué pour le véhicule considéré et pour chaque vitesse, l'énergie que celui-ci peut récupérer lors d'une décélération jusqu'à l'arrêt, la courbe est d'allure sensiblement parabolique car on sait que l'énergie cinétique est proportionnelle au carré de la vitesse. Cependant, on a tenu compte ici des diverses forces de frottement aérodynamique ou de freinage hydraulique.

En référence à la figure 5, on a représenté en ordonnées le niveau de charge SOC à ne pas dépasser en fonction de la vitesse du véhicule en kilomètres heures reportée en abscisses de 0 à 140. La courbe est sensiblement symétrique à celle représentée sur la figure 4, car l'énergie récupérée, convertie en SOC, correspond à la distance qui sépare la limite haute (ici 60%) du point sur la courbe. Ainsi, à faible vitesse du véhicule, par exemple 20 km/h, le niveau de charge du stockeur électrique 11, est de préférence égale à 60% car peu d'énergie cinétique du véhicule sera à récupérer en cas de freinage. Par contre, à 120 km/h, un niveau de charge du stockeur électrique, est préconisé à 40%, de façon à laisser 20% de surcharge disponibles pour atteindre 60%. Les 20% de charge disponibles, en d'autres termes absorbables dans le stockeur électrique, correspondent à l'énergie cinétique à récupérer convertie en niveau de charge dans le stockeur. Ainsi, dans l'exemple proposé, le niveau de charge ne devrait pas dépasser les deux tiers au-delà de 70 km/h et le niveau de charge doit être le plus bas possible au-delà de 120 km/h. Cette courbe établit le niveau de charge cible à ne pas dépasser. En deçà de ce niveau, la machine électrique est commandée de façon à continuer à recharger le stockeur électrique en prélevant du couple moteur thermique selon le niveau de charge. Cela aboutit à une stratégie de recharge prenant en compte la charge et l'énergie cinétique du véhicule par l'intermédiaire de sa vitesse.

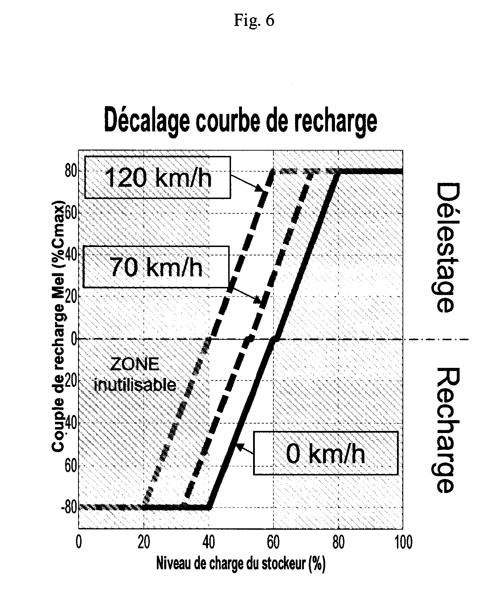

En référence à la figure 6, si à une vitesse donnée, la charge du stockeur est inférieure au niveau de charge cible, la machine électrique prélève du couple jusqu'à l'atteinte de ce niveau. Si la charge du stockeur est supérieure au niveau de charge cible, la machine électrique ne prélève plus aucun couple. La charge du stockeur baisse progressivement au fur et à mesure des prélèvements divers du système représenté par le bloc 21 sur la figure 1 et qui comprennent les auxiliaires, la transmission ou les augmentations de performance du moteur thermique. Parfois, cette décharge progressive du stockeur peut s'avérer trop lente et si une décélération survient avant que le niveau de charge cible soit atteint, une partie de l'énergie cinétique peut être perdue. C'est pourquoi, de façon avantageuse, les moyens que nous allons expliquer à présent provoquent de façon supplémentaire un délestage du moteur thermique. L'objectif consiste à rejoindre plus rapidement le niveau de charge cible et bénéficier au plus tôt des énergies disponibles lorsque la somme de la charge du stockeur électrique et de l'énergie cinétique récupérable, est supérieure à ce que peut contenir le stockeur électrique.

Sur la figure 6, les ordonnées négatives correspondent comme précédemment, au couple de recharge Mel en pourcentage du couple maximal Cmax. Pour une vitesse du véhicule égale à 0 km/h, nous avons vu précédemment, en référence à la figure 5, que le niveau de charge à ne pas dépasser est de 60%. Lorsque le niveau de charge est compris entre 40% et 60%, il convient de demander un couple qui évolue de -80% à 0% jusqu'à atteindre le niveau de 60%. En référence à la figure 5, on voit qu'à 70 km/h, il convient de ne pas dépasser 53% de niveau de charge. Sur la figure 6, la courbe correspondant à 0 km/h est décalée vers la gauche de façon à ce que la consigne de couple nulle corresponde à un niveau de charge de 53%. Au fur et à mesure que la vitesse évolue de 0 à 120 km/h, la courbe est décalée vers la gauche de façon à demander une consigne de couple nulle à 0% lorsque la charge du stockeur est à 40% pour une vitesse de 120 km/h.

Si, à une vitesse donnée, le niveau de charge du stockeur est supérieur à la charge maximale préconisée sur l'axe des abscisses, on prolonge la courbe expliquée précédemment jusqu'à un point dont l'abscisse correspond au niveau de charge constaté et l'ordonnée correspond alors à une consigne de couple positive pour délester le stockeur d'énergie jusqu'à revenir au niveau de charge qui convient pour la vitesse constatée sur l'axe des abscisses. Les courbes précédemment expliquées qui se décalaient vers la gauche dans la partie du plan des ordonnées négatives correspondant à une recharge, sont chacune prolongées vers la droite dans la partie du plan des ordonnées positives qui correspondent à un délestage du stockeur d'énergie.

Le délestage se matérialise par un apport de couple positif de la machine électrique sans recherche d'amélioration des performances du moteur thermique. Ce couple de délestage, utilisé alors pour contribuer à la traction du véhicule soulage le moteur thermique et contribue à une réduction de consommation d'énergie combustible.

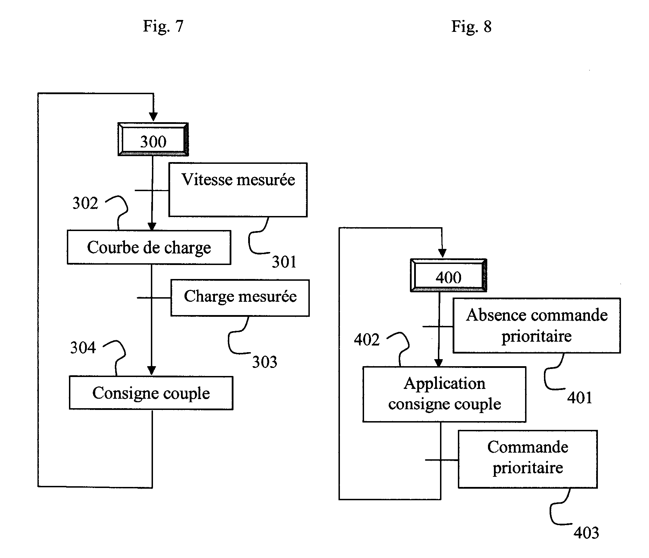

En référence à la figure 7, le module 3 exécute des étapes pour mettre en oeuvre le procédé conforme à l'invention, à partir d'une étape initiale 300. Le module 3 est agencé pour recevoir une vitesse du véhicule, mesurée par exemple à partir d'une dynamo tachymétrique non représentée. La vitesse mesurée valide une transition 301 qui active une étape 302 dans laquelle le module 3 utilise la valeur de vitesse mesurée pour accéder à une courbe de charge correspondante, soit par un calcul, soit en pointant dans une mémoire sur l'une des courbes représentées en figure 6. La charge mesurée à partir du capteur 31, valide une transition 303 qui active une étape 304 dans laquelle une consigne de couple est déterminée comme étant l'ordonnée de la courbe sélectionnée dans l'étape précédente qui correspond au point dont l'abscisse a pour valeur la charge mesurée. Cette consigne de couple est envoyée au module 4.

En référence à la figure 8, le module 4 exécute des étapes de procédé conformes à l'invention à partir d'une étape initiale 400. Une étape 402 est activée par validation d'une transition 401 qui constate une absence de commande prioritaire. Une commande prioritaire est par exemple une commande de freinage par récupération ou une commande de démarrage du moteur thermique. Une commande d'éclairage ou d'accessoires divers ne constitue pas en soi une commande prioritaire. Dans l'étape 402, le module 4 applique la consigne de couple reçue du module 3, au convertisseur 50. Le module 4 revient dans l'étape initiale 400 lorsqu'une détection de commande prioritaire valide une transition 403. Il va de soi que les modules 3 et 4 peuvent être indifféremment dans deux circuits électroniques différents ou rassemblés dans un même circuit électronique.

La combinaison d'une plage de stockeur électrique non chargée pour que l'énergie cinétique récupérée ne le sature pas et des moyens de sa protection rapide par le délestage permet finalement de garantir la disponibilité de la prestation de freinage électrique en pied levé, à plat ou en pente montante et de limiter l'occurrence de sa non disponibilité en pente descendante.

L'invention et les moyens qui viennent d'être expliqués pour la mettre en oeuvre, permettent de se prémunir de la saturation du stockeur électrique par de l'énergie cinétique. Par extension, les moyens peuvent être adaptés pour la protection de la saturation du stockeur par de l'énergie potentielle liée à l'altitude. Les énergies en jeu ne sont pas du même ordre car l'énergie cinétique est finie (limitation de vitesse) alors que l'énergie potentielle l'est beaucoup moins (montagne). Le stockeur électrique 11 n'est pas limité à une batterie ou à des super condensateurs, l'invention fonctionne avec tout type de technologie de stockeur électrique. Le fonctionnement du véhicule hybride en roulage électrique pur ou non, n'intervient pas sur l'invention qui porte sur la recharge du stockeur, et accessoirement sur son délestage.

## Revendications

1. Procédé de contrôle d'une charge électrique dans un système de véhicule hybride qui comporte un stockeur électrique et une machine électrique, comprenant :
- une première étape (302) pour déterminer une charge maximale admissible dans le stockeur électrique, pour chaque vitesse du véhicule, à partir de la capacité maximale du stockeur électrique et de l'énergie cinétique récupérable lors d'une décélération du véhicule jusqu'à l'arrêt du véhicule, pour permettre au stockeur électrique de toujours pouvoir récupérer toute l'énergie de décélération ;
- une deuxième étape (304) pour déterminer une consigne de couple à appliquer à la machine électrique de façon à atteindre ladite charge maximale admissible ;
- une troisième étape (402) pour appliquer ladite consigne de couple à la machine électrique.

2. Procédé selon la revendication 1, **caractérisé en ce que** dans la deuxième étape (304), la consigne de couple est :
- déterminée à une valeur négative extrême basse de façon à recharger fortement le stockeur électrique tant que la charge électrique dans le stockeur électrique est inférieure à une charge minimale, et
- déterminée à une valeur négative proportionnelle à un écart entre la charge électrique dans le stockeur électrique et la charge maximale admissible tant que la charge électrique dans le stockeur électrique est inférieure à ladite charge maximale admissible de façon à recharger progressivement le stockeur électrique.

3. Procédé selon l'une des revendications précédentes, **caractérisé en ce que** dans la deuxième étape (304), la consigne de couple est :
- déterminée à une valeur positive proportionnelle à un écart entre la charge électrique dans le stockeur électrique et la charge maximale admissible tant que la charge électrique dans le stockeur électrique est supérieure à ladite charge maximale admissible de façon à délester progressivement le stockeur électrique.

4. Procédé selon l'une de revendications précédentes, **caractérisé en ce que** le stockeur électrique est en outre apte à maintenir la prestation de freinage électrique

5. Dispositif de contrôle d'une charge électrique dans un système de véhicule hybride qui comporte un stockeur électrique (11) et une machine électrique (53), comprenant :
- un premier module (3) agencé pour déterminer une charge maximale admissible dans le stockeur électrique pour chaque vitesse du véhicule, à partir de la capacité maximale du stockeur électrique et de l'énergie cinétique récupérable lors d'une décélération du véhicule jusqu'à l'arrêt du véhicule, sachant que l'énergie cinétique d'un véhicule est proportionnelle au carré de sa vitesse ; - un deuxième module (4) agencé pour appliquer ladite consigne de couple à la machine électrique (53).

6. Dispositif selon la revendication 5, **caractérisé en ce que** le premier module (3) comprend des valeurs mémorisées pour déterminer la consigne de couple :
- à une valeur négative extrême basse de façon à recharger fortement le stockeur électrique tant que la charge électrique dans le stockeur électrique est inférieure à une charge minimale, et
- à une valeur négative proportionnelle à un écart entre la charge électrique dans le stockeur électrique (11) et la charge maximale admissible tant que la charge électrique dans le stockeur électrique est inférieure à ladite charge maximale admissible de façon à recharger progressivement le stockeur électrique (11).

7. Dispositif selon l'une des revendications 5 ou 6, **caractérisé en ce que** le premier module (3) comprend des valeurs mémorisées pour déterminer la consigne de couple :
- à une valeur positive proportionnelle à un écart entre la charge électrique dans le stockeur électrique (11) et la charge maximale admissible tant que la charge électrique dans le stockeur électrique est supérieure à ladite charge maximale admissible de façon à délester progressivement le stockeur électrique (11).

8. Dispositif selon l'une des revendications 5 à 7, **caractérisé en ce que** le stockeur électrique est en outre apte à maintenir la prestation de freinage électrique.
